# EUROPÄISCHE PATENTANMELDUNG

(11) **EP 2 709 256 A1**
(43) Veröffentlichungstag der Anmeldung: **19.03.2014**
(21) Anmeldenummer: 12184352.8
(22) Anmeldetag: 14.09.2012
(51) Int. Cl.: H02M 3/335

(54) **Schaltnetzteil mit galvanischer Trennung und Verfahren zum Betrieb**

(71) Anmelder: Siemens Aktiengesellschaft, 80333 München (DE)
(72) Erfinder: Hallak, Jalal, 1220 Wien (AT)

(57) **Zusammenfassung**

Die Erfindung betrifft ein Verfahren zum Betreiben eines Schaltnetzteils, umfassend eine primärseitige Schaltungsanordnung und eine sekundärseitige Schaltungsanordnung, welche voneinander mittels eines Transformators (T) galvanisch getrennt sind, wobei aus einer sekundärseitigen Regelgröße (x, x2) und einer sekundärseitig vorgegebenen Führungsgröße (w, w2) mittels eines Reglers (Reg) ein sekundärseitiges Reglersignal (r2) gebildet wird und wobei dieses Reglersignal (r2) mittels eines Optokopplers (O) in ein primärseitiges Reglersignal (u, r1) übertragen wird. Dabei wird primärseitig ein Hilfssignal (x1) gebildet, welches dynamische Anteile der sekundärseitigen Regelgröße (x2) nachbildet und einem Hilfsregler (HR) als primärseitige Regelgröße vorgegeben wird, wobei das primärseitige Reglersignal (r1) dem Hilfsregler (HR) als primärseitige Führungsgröße vorgegeben wird und wobei der Hilfsregler (HR) ein Stellsignal (u') zur Ansteuerung des Schaltnetzteils ausgibt.

## Beschreibung

Die Erfindung betrifft ein Verfahren zum Betreiben eines Schaltnetzteils, umfassend eine primärseitige Schaltungsanordnung und eine sekundärseitige Schaltungsanordnung, welche voneinander mittels eines Transformators galvanisch getrennt sind, wobei aus einer sekundärseitigen Regelgröße und einer sekundärseitig vorgegebenen Führungsgröße mittels eines Reglers ein sekundärseitiges Reglersignal gebildet wird und wobei dieses Reglersignal mittels eines Optokopplers in ein primärseitiges Reglersignal übertragen wird. Zudem bezieht sich die Erfindung auf ein entsprechendes Schaltnetzteil.

Schaltnetzteile mit galvanischer Trennung zwischen einer Primärseite und einer Sekundärseite benötigen ein Übertragungselement, welches ein sekundärseitiges Reglersignal ebenfalls galvanisch getrennt auf die Primärseite überträgt.

Nach dem Stand der Technik kommt als Übertragungselement ein Optokoppler zum Einsatz. Dabei ist zu beachten, dass ein Optokoppler bei der Signalübertragung eine Stromverstärkung des Signals bewirkt.

Für ein stabiles Regelkreisverhalten wird die Stromverstärkung des Optokopplers bei der Auslegung eines sekundärseitigen Reglers berücksichtigt. Dabei tritt die Schwierigkeit auf, dass die Stromverstärkung des Optokopplers zu massiver Streuung neigt. Das ist auf Herstellungstoleranzen und auf Eigenschaftsänderungen bei geänderten Temperaturen zurückzuführen. Änderungen der Stromverstärkung des Optokopplers können eine Instabilität des Regelkreises bewirken.

Der Erfindung liegt die Aufgabe zugrunde, für ein Verfahren der eingangs genannten Art eine Verbesserung gegenüber dem Stand der Technik anzugeben. Zudem soll eine Anordnung zur Durchführung des Verfahrens angegeben werden.

Erfindungsgemäß wird diese Aufgabe gelöst durch ein Verfahren gemäß Anspruch 1 und ein Schaltnetzteil gemäß Anspruch 5. Weiterbildungen sind in abhängigen Ansprüchen angegeben.

Dabei wird primärseitig ein Hilfssignal gebildet, welches dynamische Anteile der sekundärseitigen Regelgröße nachbildet und einem Hilfsregler als primärseitige Regelgröße vorgegeben wird, wobei das primärseitige Reglersignal dem Hilfsregler als primärseitige Führungsgröße vorgegeben wird und wobei der Hilfsregler ein Stellsignal zur Ansteuerung des Schaltnetzteils ausgibt. Der sekundärseitig angeordnete Regler sorgt dabei für eine ausreichende Genauigkeit und regelt statische Änderungen aus. Das dynamische Verhalten des Regelkreises wird hingegen durch den primärseitig angeordneten Hilfsregler bestimmt.

Mittels dieses zweischleifigen Regelkreises werden Abweichungen der Stromverstärkung des Optokopplers ausgeglichen. Der Einfluss der Stromverstärkung des Optokopplers auf das übertragene Reglersignal ist dann vernachlässigbar. Bemerkbar ist dies insbesondere bei einem Lastsprung, der einen sprunghaften Anstieg oder Abfall des Stromes am Ausgang des Schaltnetzteils zur Folge hat.

Zudem verbessert sich durch den zweischleifigen Regelkreis das Regelverhalten des Gesamtsystems im unteren Bereich der Eingangsspannung des Schaltnetzteils.

In einer Ausprägung der Erfindung wird das Hilfssignal mittels einer primärseitigen Hilfswicklung des Transformators gebildet und statische Anteile des Hilfssignals werden mittels eines Hochpassfilters gedämpft. Eine solche Hilfssignalerzeugung ist bei einstufigen Wandlern sinnvoll. Die Hilfswicklung ist dabei auch zur Energieversorgung primärseitiger Schaltungskomponenten nutzbar.

Dabei ist es günstig, wenn das dynamische Änderungsverhalten des Hilfssignals mittels eines RC-Glieds an das dynamische Änderungsverhalten der sekundärseitigen Regelgröße angepasst wird.

Eine andere Ausprägung der Erfindung sieht vor, dass das Hilfssignal aus einer Zwischenkreisspannung abgeleitet wird und dass statische Anteile des Hilfssignals mittels eines Hochpassfilters gedämpft werden. Eine derart nutzbare Zwischenkreisspannung liegt bei mehrstufig aufgebauten Schaltnetzteilen vor. Dabei wird primärseitig in einer ersten Wandlerstufe eine Eingangsspannung in die Zwischenkreisspannung umgewandelt. Mittels Transformator erfolgt in einer zweiten Stufe eine Umwandlung der Zwischenkreisspannung in eine Ausgangsspannung, wobei zwischen den Spannungen eine starre Kopplung gegeben ist. Das ist bei Resonanzwandlern und Gegentaktwandlern der Fall.

Ein erfindungsgemäßes Schaltnetzteil ist zur Durchführung eines der vorgestellten Verfahren eingereichtet, wobei der Hilfsregler primärseitig angeordnet und über ein Differenzglied mit dem Ausgang des Optokopplers und dem Ausgang eines Hochpassfilters verbunden ist und wobei der Ausgang des Hilfsreglers mit einer PWM-Steuerung des Schaltnetzteils verbunden ist.

In einer Ausprägung weist der Transformator primärseitig eine Hilfswicklung auf, an der eine Hilfsspannung zur Nachbildung des sekundärseitigen Regelsignals anliegt. Dabei ist es günstig, wenn die Hilfsspannung über ein RC-Glied dem Hochpassfilter zugeführt ist. Günstigerweise ist auch die PWM-Steuerung zur Versorgung an die Hilfswicklung angeschlossen.

Eine andere Ausprägung sieht vor, dass primärseitig zumindest eine weitere Wandlerstufe angeordnet ist, welche mittels PWM-Steuerung angesteuert ist und dass zwischen dieser Wandlerstufe und dem Transformator ein Zwischenkreis angeordnet ist. Dabei ist günstigerweise eine am Zwischenkreis anliegende Zwischenkreisspannung dem Hochpassfilter zugeführt.

Die Erfindung wird nachfolgend in beispielhafter Weise unter Bezugnahme auf die beigefügten Figuren erläutert. Es zeigen in schematischer Darstellung:
- Fig. 1: Regelkreis nach dem Stand der Technik
- Fig. 2: Schaltnetzteil mit einer Wandlerstufe und Regelung nach dem Stand der Technik
- Fig. 3: Schaltnetzteil mit einer Wandlerstufe und zweischleifiger Regelung
- Fig. 4: Schaltnetzteil mit mehreren Wandlerstufen und zweischleifiger Regelung

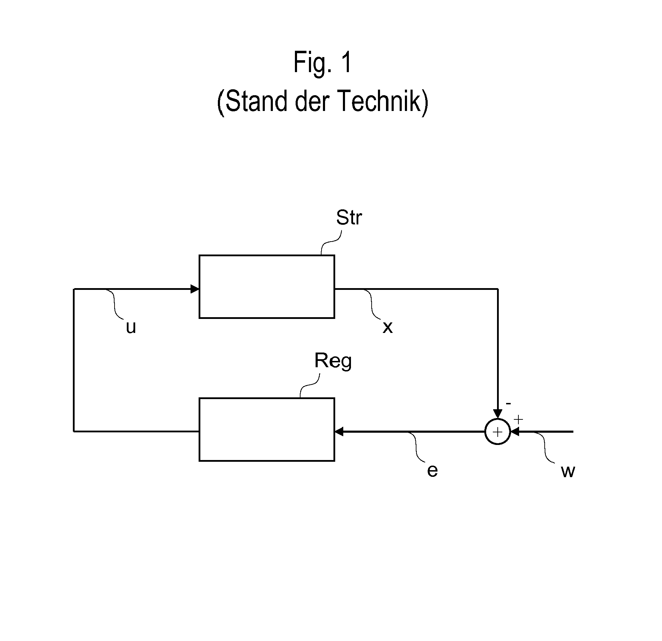

Ein allgemeiner Regelkreis gemäß Fig. 1 besteht aus einer Regelstrecke Str, an deren Ausgang eine Regelgröße x messbar ist. Mittels eines Differenzglieds wird die Regelgröße x von einer Führungsgröße w abgezogen. Die so erhaltene Regelabweichung e wird einem Regler Reg zugeführt, an dessen Ausgang eine Stellgröße u ausgegeben wird. Mit dieser Stellgröße u wird die Regelstrecke Str rangesteuer, um die Regelgröße x der Führungsgröße w anzunähern.

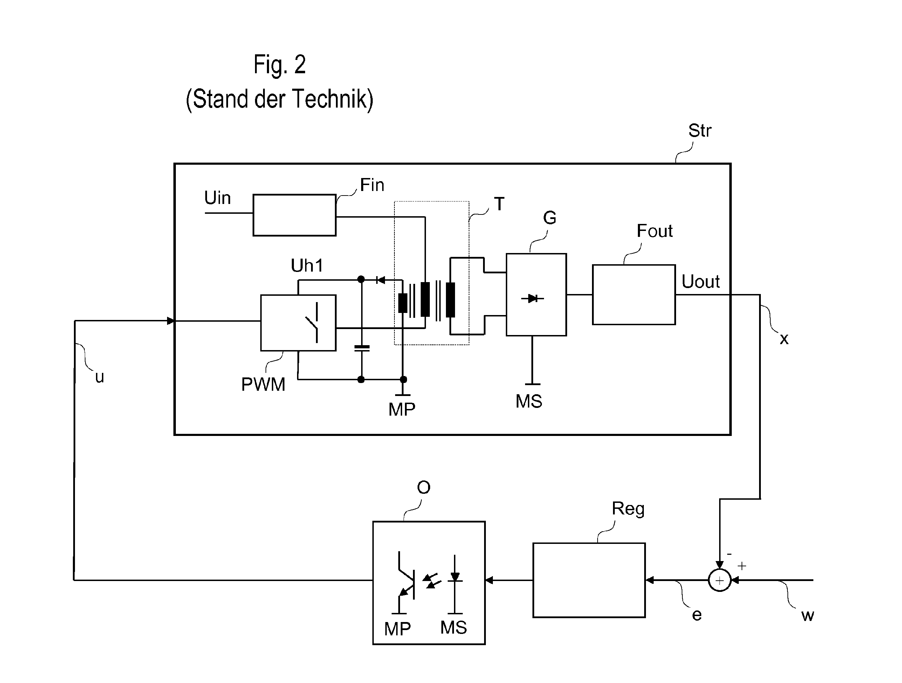

Im Falle eines Schaltnetzteils bildet der Leistungsteil mit einer PWM-Steuerung PWM die Regelstrecke Str (Fig. 2-4). Regelgröße x ist dabei die Ausgangsspannung Uout des Schaltnetzteils.

Fig. 2 zeigt eine einstufige Wandlerausführung mit einem Transformator T, der eine primärseitige Schaltungsanordnung galvanisch von einer sekundärseitigen Schaltungsanordnung trennt. Primärseitig ist ein Eingangsfilter Fin vorgesehen, welcher die Eingangsspannung Uin glättet. Die geglättete Eingangsspannung Uin wird mittels eines Schaltelements getaktet an eine Primärwicklung des Transformators angeschaltet. Dies geschieht mittels der PWM-Steuerung PWM. Versorgt wird die PWM-Steuerung mittels einer primärseitig angeordneten Hilfswicklung, an der gegen ein primäres Bezugspotenzial MP eine Hilfsspannung Uh1 anliegt. Die Hilfsspannung Uh1 ist beispielsweise mittels einer Diode gleichgerichtet und mittels eines Kondensators geglättet.

Sekundärseitig ist ein Gleichrichter G angeordnet, welcher die an einer Sekundärwicklung des Transformators T anliegende Spannung gleichrichtet. Bezogen ist diese Spannung auf ein sekundärseitiges Bezugspotential MS. Zwischen Ausgang und Gleichrichtern G ist üblicherweise ein Ausgangsfilter Fout angeordnet.

Im vorliegenden Fall wird als Führungsgröße w eine Sollausgangsspannung vorgegeben. Die Abweichung der als Istausgangsspannung Uout vorliegenden Regelgröße x wird einem sekundärseitigen Regler Reg zugeführt. Das Reglersignal am Ausgang des Reglers wird in weiterer Folge mittels eines Optokopplers O in ein primärseitiges Reglersignal übertragen. Gemäß Stand der Technik stellt dieses primärseitige Reglersignal die Stellgröße u zur Ansteuerung des Schaltnetzteils dar.

Um die eingangs beschriebene Problematik der gestreuten Stromverstärkung des Optokopplers O zu lösen, wird die vorliegende Erfindung anhand zweier Ausführungsbeispiele erläutert.

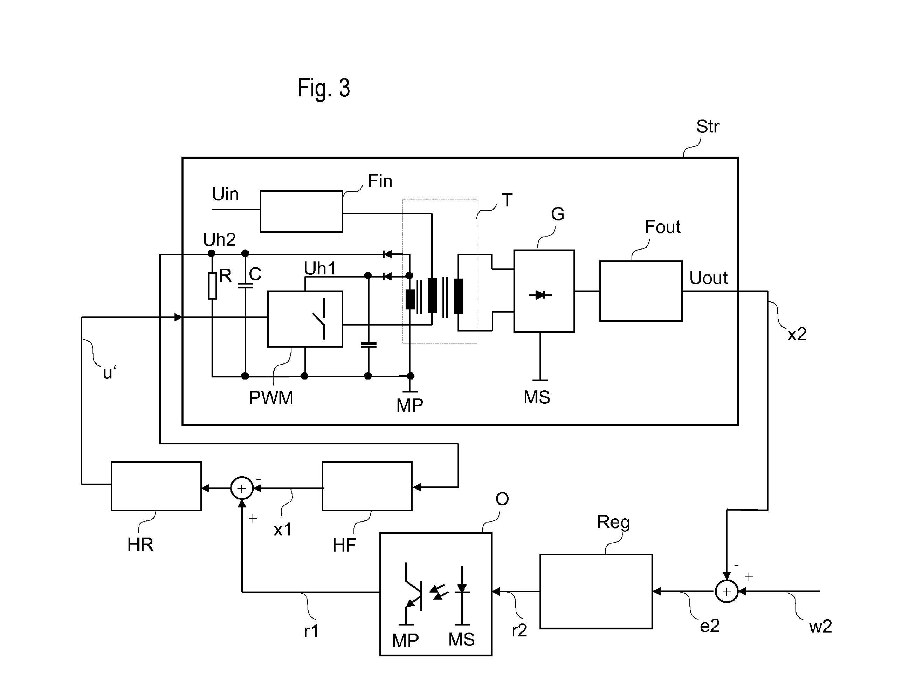

Fig. 3 zeigt eine Weiterbildung des in Fig. 2 dargestellten Schaltnetzteilaufbaus. Die vorhandene Hilfswicklung des Transformators T wird dabei zur Erzeugung eines primärseitigen Hilfssignals x1 genutzt. Dabei wird die an der Hilfswicklung anliegende Hilfsspannung Uh2 zunächst gleichgerichtet. Diese Hilfsspannung Uh2 bildet dabei die Ausgangsspannung Uout nach. Das dynamische Verhalten dieser beiden Spannungen Uh2, Uout wird mittels Zeitkonstante eines RC-Glieds angepasst. Erforderlich ist diese Anpassung bei nicht zu vernachlässigenden Streuinduktivitäten zwischen der Hilfswicklung und der Sekundärwicklung des Transformators T.

Die derart angepasste Hilfsspannung Uh2 liegt nach Dämpfung der statischen Anteile mittels eines Hochpassfilters HF als Hilfssignal x1 vor, welches als primärseitige Regelgröße einem Hilfsregler HR vorgegeben wird.

Sekundärseitig liegt die Ausgangsspannung Uout als sekundärseitige Regelgröße x2 vor. Diese wird von einer sekundärseitigen Führungsgröße w2 (Sollausgangsspannung) abgezogen. Die sich ergebene sekundärseitige Reglerabweichung e2 ist dem Regler Reg zugeführt. Das sekundärseitige Reglersignal r2 am Ausgang des Reglers Reg wird mittels Optokoppler O auf die Primärseite übertragen und dem Hilfsregler HR als primärseitige Führungsgröße r1 vorgegeben.

Durch Abzug des als primärseitige Regelgröße vorliegendes Hilfssignals x1 von der primärseitigen Führungsgröße r1 wird eine primärseitige Regelabweichung gebildet, die dem Hilfsregler HR zugeführt ist. Das Stellsignal u' am Ausgang des Hilfsreglers HR dient zur Ansteuerung der PWM-Steuerung PWM.

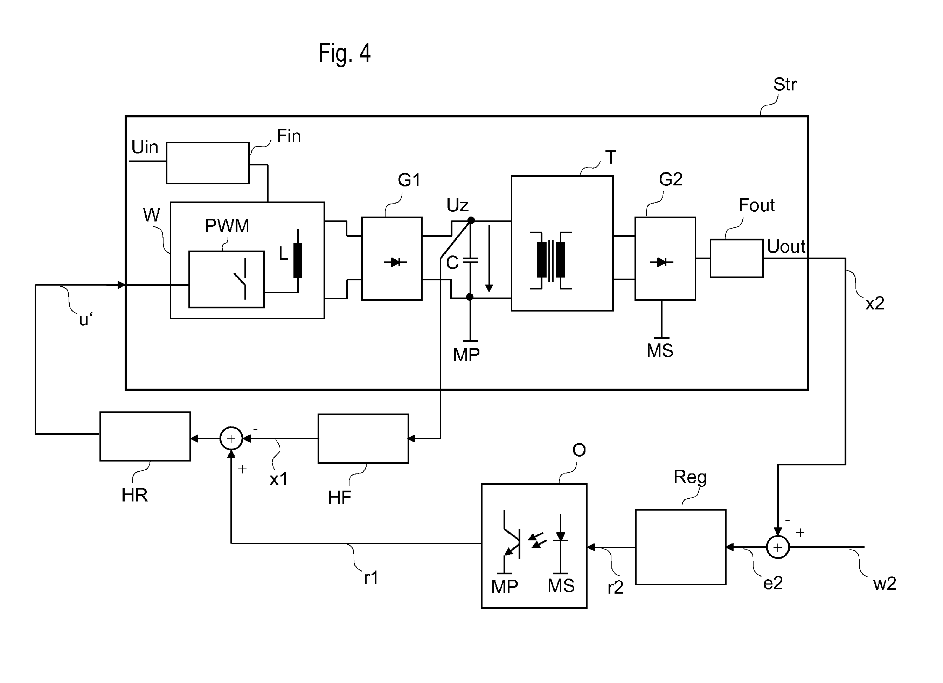

Ein Schaltnetzteil mit zwei Wandlerstufen ist in Fig. 4 dargestellt. Mittels eines primärseitigen Wandlers W wird eine Eingangsspannung Uin über einen primärseitigen Gleichrichter G1 in eine Zwischenkreisspannung Uz umgewandelt. Diese liegt an einem Zwischenkreiskondensator C an.

Der primärseitige Wandler W umfasst dabei die PWM-Steuerung PWM. Die zweite Wandlerstufe umfasst den Transformator T mit einer starren Kopplung zwischen Primär- und Sekundärspannung. Als Primärspannung dieser Wandlerstufe liegt die Zwischenkreisspannung Uz vor. Sekundärseitig liegt über einen sekundärseitigen Gleichrichter G2 die Ausgangsspannung Uout des Schaltnetzteils an.

Die Regelung entspricht dem zu Fig. 3 erläuterten Verfahren, wobei die mittels Hochpassfilter HF gedämpfte Zwischenkreisspannung Uz dem Hilfsregler HR als primärseitige Regelgröße x1 zugeführt ist.

Das Stellsignal u' am Ausgang des Hilfsreglers HR ist der PWM-Steuerung PWM der ersten Reglerstufe zugeführt.

## Patentansprüche

1. Verfahren zum Betreiben eines Schaltnetzteils, umfassend eine primärseitige Schaltungsanordnung und eine sekundärseitige Schaltungsanordnung, welche voneinander mittels eines Transformators (T) galvanisch getrennt sind, wobei aus einer sekundärseitigen Regelgröße (x, x2) und einer sekundärseitig vorgegebenen Führungsgröße (w, w2) mittels eines Reglers (Reg) ein sekundärseitiges Reglersignal (r2) gebildet wird und wobei dieses Reglersignal (r2) mittels eines Optokopplers (O) in ein primärseitiges Reglersignal (u, r1) übertragen wird, **dadurch gekennzeichnet, dass** primärseitig ein Hilfssignal (x1) gebildet wird, welches dynamische Anteile der sekundärseitigen Regelgröße (x2) nachbildet und einem Hilfsregler (HR) als primärseitige Regelgröße vorgegeben wird, dass das primärseitige Reglersignal (r1) dem Hilfsregler (HR) als primärseitige Führungsgröße vorgegeben wird und dass der Hilfsregler (HR) ein Stellsignal (u') zur Ansteuerung des Schaltnetzteils ausgibt.

2. Verfahren nach Anspruch 1, **dadurch gekennzeichnet, dass** das Hilfssignal (x1) mittels einer primärseitigen Hilfswicklung des Transformators (T) gebildet wird und dass statische Anteile des Hilfssignals (x1) mittels eines Hochpassfilters (HF) gedämpft werden.

3. Verfahren nach Anspruch 2, **dadurch gekennzeichnet, dass** das dynamische Änderungsverhalten des Hilfssignals (x1) mittels eines RC-Glieds an das dynamische Änderungsverhalten der sekundärseitigen Regelgröße (x2) angepasst wird.

4. Verfahren nach Anspruch 1, **dadurch gekennzeichnet, dass** das Hilfssignal (x1) aus einer Zwischenkreisspannung (Uz) abgeleitet wird und dass statische Anteile des Hilfssignals (x1) mittels eines Hochpassfilters (HF) gedämpft werden.

5. Schaltnetzteil, welches zur Durchführung eines Verfahrens nach einem der Ansprüche 1 bis 4 eingerichtet ist, **dadurch gekennzeichnet, dass** der Hilfsregler (HR) primärseitig angeordnet und über ein Differenzglied mit dem Ausgang des Optokopplers (O) und dem Ausgang eines Hochpassfilters (HF) verbunden ist und dass der Ausgang des Hilfsreglers (HF) mit einer PWM-Steuerung (PWM) des Schaltnetzteils verbunden ist.

6. Schaltnetzteil nach Anspruch 5, **dadurch gekennzeichnet, dass** der Transformator (T) primärseitig eine Hilfswicklung aufweist, an der eine Hilfsspannung (Uh2) zur Nachbildung des sekundärseitigen Regelsignals (x2) anliegt.

7. Schaltnetzteil nach Anspruch 6, **dadurch gekennzeichnet, dass** die Hilfsspannung (Uh2) über ein RC-Glied dem Hochpassfilter (HF) zugeführt ist.

8. Schaltnetzteil nach Anspruch 6 oder 7, **dadurch gekennzeichnet, dass** die PWM-Steuerung (PWM) zur Versorgung an die Hilfswicklung angeschlossen ist.

9. Schaltnetzteil nach Anspruch 5, **dadurch gekennzeichnet, dass** primärseitig zumindest eine weitere Wandlerstufe angeordnet ist, welche mittels PWM-Steuerung (PWM) angesteuert ist und dass zwischen dieser Wandlerstufe und dem Transformator (T) ein Zwischenkreis angeordnet ist.

10. Schaltnetzteil nach Anspruch 9, **dadurch gekennzeichnet, dass** eine am Zwischenkreis anliegende Zwischenkreisspannung (Uz) dem Hochpassfilter (HF) zugeführt ist.
